(19) **Europäisches Patentamt / European Patent Office / Office européen des brevets**

(11) **EP 2 319 268 B1**

(12) **EUROPEAN PATENT SPECIFICATION**

(45) Date of publication and mention of the grant of the patent:
**10.10.2012 Bulletin 2012/41**

(51) Int Cl.:
*H04W 40/24* (2009.01)    *H04W 40/02* (2009.01)
*H04L 12/56* (2006.01)

(21) Application number: **09786551.3**

(86) International application number:
**PCT/IB2009/052977**

(22) Date of filing: **08.07.2009**

(87) International publication number:
**WO 2010/013154 (04.02.2010 Gazette 2010/05)**

(54) **A method for discovering highest throughput routes in wireless mesh networks**

Verfahren zur Erkennung von höchsten Durchsatzrouten in drahtlosen Mesh-Netzwerken

Procédé servant à découvrir des chemins à débit les plus élevé dans des réseaux maillés sans fil

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.07.2008 US 84709 P**

(43) Date of publication of application:
**11.05.2011 Bulletin 2011/19**

(73) Proprietor: **Koninklijke Philips Electronics N.V.
5621 BA Eindhoven (NL)**

(72) Inventor: **ZHAI, Hongqiang
Briarcliff Manor, New York 10510-8001 (US)**

(74) Representative: **Kroeze, Johannes Antonius
Philips
Intellectual Property & Standards
P.O. Box 220
5600 AE Eindhoven (NL)**

(56) References cited:
WO-A-2004/114690    WO-A-2007/073466
WO-A-2007/099263    US-A1- 2004 029 553

- JOHNSON RICE UNIVERSITY Y HU UIUC D MALTZ MICROSOFT RESEARCH D: "The Dynamic Source Routing Protocol (DSR) for Mobile Ad Hoc Networks for IPv4; rfc4728.txt" IETF STANDARD, INTERNET ENGINEERING TASK FORCE, IETF, CH, 1 February 2007 (2007-02-01), pages 1-107, XP015055045 inet ISSN: 0000-0003

- PERKINS NOKIA RESEARCH CENTER E BELDING-ROYER UNIVERSITY OF CALIFORNIA C ET AL: "Ad hoc On-Demand Distance Vector (AODV) Routing; rfc3561.txt" IETF STANDARD, INTERNET ENGINEERING TASK FORCE, IETF, CH, 1 July 2003 (2003-07-01), XP015009343 ISSN: 0000-0003

- AWDUCHE MOVAZ NETWORKS A CHIU CELION NETWORKS A ELWALID I WIDJAJA LUCENT TECHNOLOGIES X XIAO REDBACK NETWORKS D: "Overview and Principles of Internet Traffic Engineering; rfc3272.txt", 20020501, 1 May 2002 (2002-05-01), XP015009050, ISSN: 0000-0003

- KOWALIK K ET AL: "Should qos routing algorithms prefer shortest paths?", NEW FRONTIERS IN TELECOMMUNICATIONS : 2003 IEEE INTERNATIONAL CONFERENCE ON COMMUNICATIONS ; ICC 2003 ; 11 - 15 MAY 2003, ANCHORAGE, ALASKA, USA; [IEEE INTERNATIONAL CONFERENCE ON COMMUNICATIONS], IEEE OPERATIONS CENTER, PISCATAWAY, NJ, vol. 1, 11 May 2003 (2003-05-11), pages 213-217, XP010642745, DOI: 10.1109/ICC.2003.1204172 ISBN: 978-0-7803-7802-5

- NANDIRAJU N ET AL: "Wireless Mesh Networks: Current Challenges and Future Directions of Web-In-The-Sky", IEEE WIRELESS COMMUNICATIONS, IEEE SERVICE CENTER, PISCATAWAY, NJ, US, vol. 14, no. 4, 1 August 2007 (2007-08-01) , pages 79-89, XP011191782, ISSN: 1536-1284, DOI: 10.1109/MWC. 2007.4300987

## Description

This application claims the benefit of U.S. Provisional Application No. 61/084,709 filed on July 30, 2008.

The invention generally relates to the discovery of routes in mesh networks.

The WiMedia specification for ultra-wideband (UWB) systems defines a fully distributed medium access control (MAC) protocol for wireless personal area networks (WPANs). Due to regulatory restrictions the transmission power and transmission range of nodes in a WPAN is now limited. The WiMedia specification supports a number of different channel rates, including 53.3 Mbps, 80 Mbps, 106.7 Mbps, 160 Mbps, 200 Mbps, 320 Mbps, 400 Mbps, and 480Mbps.

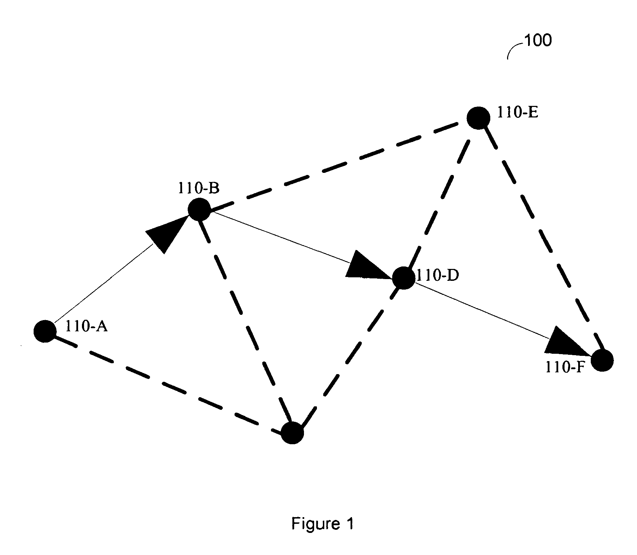

To extend the communication range of WiMedia based WPANs, a mesh-enabled MAC protocol can be utilized in such networks. The mesh-enabled MAC protocol enables a node in the network to reach another node out of its direct communication range through other intermediate nodes. The intermediate nodes forward/relay the packets from a source node towards a destination node. The operation of the mesh MAC protocol is illustrated in Figure 1. In a mesh WiMedia based WPAN 100 a node 110-A cannot directly communicate with a node 110-F as they are out of each other's transmission range. However, the node 110-A can send packets to the node 110-F through mesh-enabled nodes 110-B and 110-D. Therefore, the route for transmitting data from the source node 110-A to a destination node 110-F includes the forwarding nodes 110-B and 110-D. The mesh-enabled nodes are nodes that implement the mesh MAC protocol.

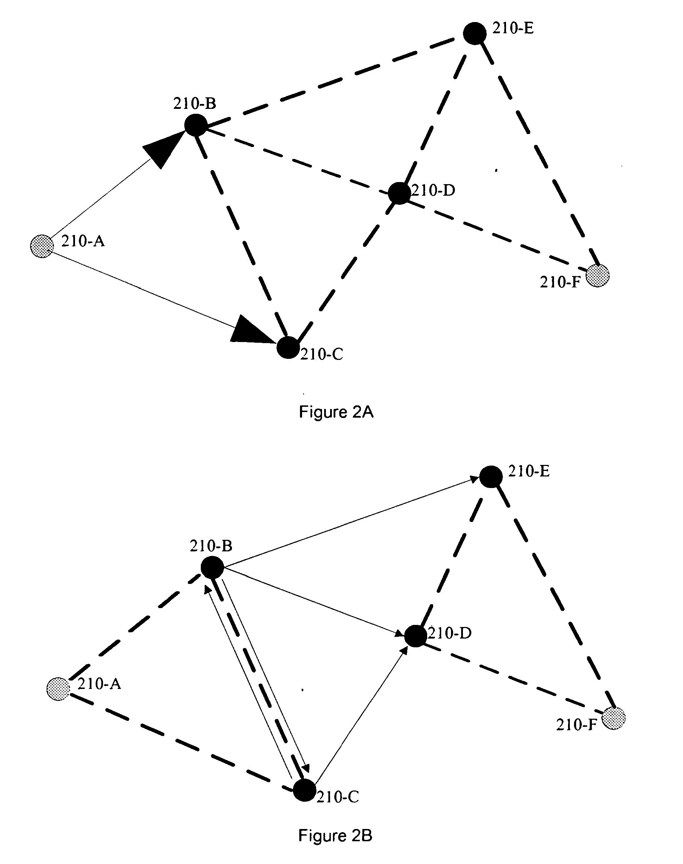

Existing route discovery and routing protocols include, for example, a dynamic source routing (DSR) protocol and an ad hoc on demand distance vector (AODV) protocol. These protocols find a route only when there is a demand of traffic delivery, thus facilitating low routes maintenance overhead. As illustrated in Figure 2A, in order to discover a route, a source node 210-A broadcasts a route discovery request (RREQ) packet that is received by nodes 210-B and 210-C, which then forward the RREQ to their neighboring device(s). For example, as shown in Figure 2B, the node 210-B forwards a received

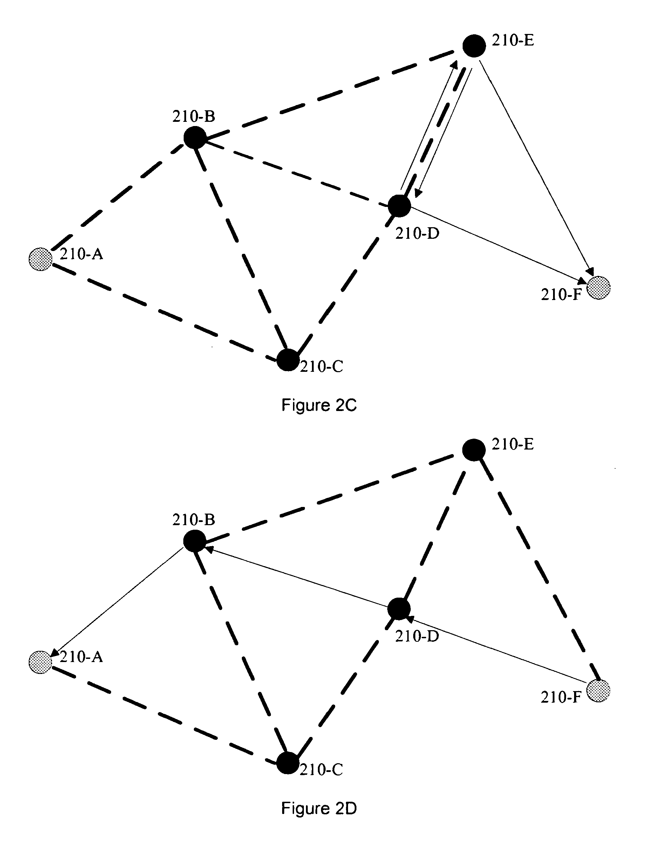

RREQ to a node 210-C, 210-D, and 210-E, while the node 210-A forwards a received RREQ to a node 210-B and 210-D. The same process is carried out by the nodes 210-E and 210-D (see Figure 2C). After receiving a RREQ packet, the destination node sends back a route discovery response (RREP) packet to the source node along the route that a received RREQ travelled through. This is illustrated in Figure 2D where a node 210-F is the destination node. Based on the RREP the source node 210-A determines the route to send packets to the destination node 210-F.

The DSR and AODV protocols typically find routes with the smallest hop count, i.e., routes travelling through the smallest number of intermediate nodes. Consequently, each hop along the route has a hop distance close to the largest communication range. Thus, discovered routes can support only low transmission rates. As a result, the benefits of higher rates are not fully utilized. US 2004/0029553, WO 2004/114690, WO 2007/073466, RFC 3561 and RFC 4728 relate also to route discovery in meshed networks.

It would be therefore advantageous to provide an efficient route discovery solution in WiMedia mesh networks. The invention is defined by the independent claims 1 and 14.

The subject matter that is regarded as the invention is particularly pointed out and distinctly claimed in the claims at the conclusion of the specification. The foregoing and other features and advantages of the invention will be apparent from the following detailed description taken in conjunction with the accompanying drawings.

Figure 1 is a schematic diagram of a mesh WiMedia WPAN.
Figures 2A, 2B, 2C, and 2D are schematic diagrams of networks useful in demonstrating the operation of the existing discovery protocols.
Figure 3 is a flowchart describing the route discovery method implemented in accordance with an embodiment of the invention.
Figure 4 is a flowchart describing the step of computing a route price implemented in accordance with an embodiment of the invention.
Figures 5A, 5B, 5C, 5D, 5E, 5F and 5G are schematic diagrams of networks useful in demonstrating the operation of the discovery protocol implemented in accordance with an embodiment of the invention.

It is important to note that the embodiments disclosed by the invention are only examples of the many advantageous uses of the innovative teachings herein. In general, statements made in the specification of the present disclosure do not necessarily limit any of the various claimed inventions. Moreover, some statements may apply to some inventive features but not to others. In general, unless otherwise indicated, singular elements may be in plural and vice versa with no loss of generality. In the drawings, like numerals refer to like parts through several views.

The discovery process disclosed herein finds a route between a source node and a destination node with the highest throughput. In accordance with the principles of the invention a route discovery request (RREQ) is a packet constructed to carry at least identification (ID) numbers of nodes that the RREQ travels through, channel rates used by links along the route to transmit the RREQ, a price of the route that the RREQ travelled through, and a last-node-neighbors list. The route price is a reciprocal sum of the effective rates calculated for links in a route. The last-node-neighbors list keeps a record of nodes on the route which are also the neighbors of the last node that the RREQ travelled through. Each node in the network maintains a neighbor table including an ID number of each of its neighboring nodes and a cache memory for storing recently received RREQs.

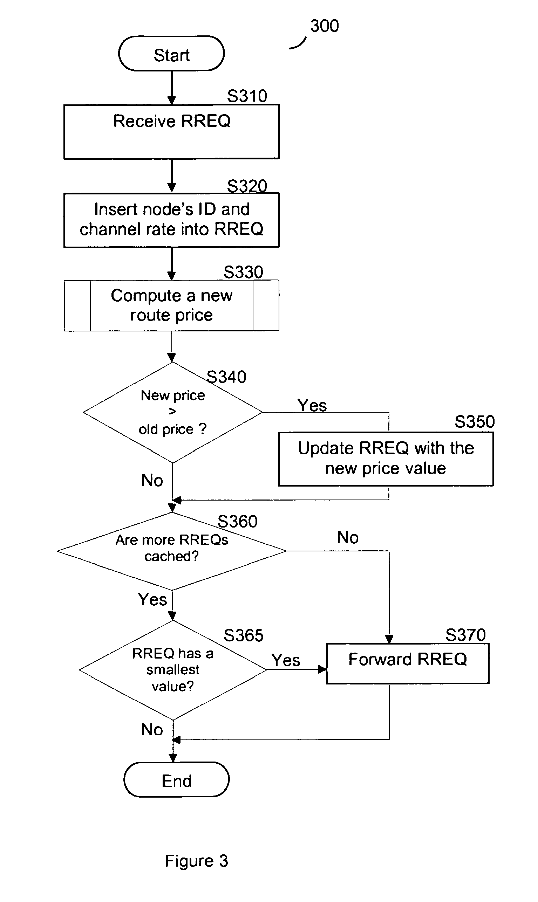

Figure 3 shows an exemplary and non-limiting flowchart 300 describing the method for discovering routes in wireless mesh networks implemented in accordance with an embodiment of the invention. The method is initiated by a source node which broadcasts a RREQ carrying at least the information mentioned above. The method is executed by each intermediate node, (i.e., a node in a path between the source node and destination node) receiving a RREQ. When transmitted from the source node the RREQ includes the source node's ID. At S310, an intermediate node receives a RREQ. At S320, an intermediate node inserts into the RREQ its ID and the rate of a link on which the RREQ is received. At S330, a price of route on which the RREQ travelled, i.e., a route between the source node and the intermediate node, is computed.

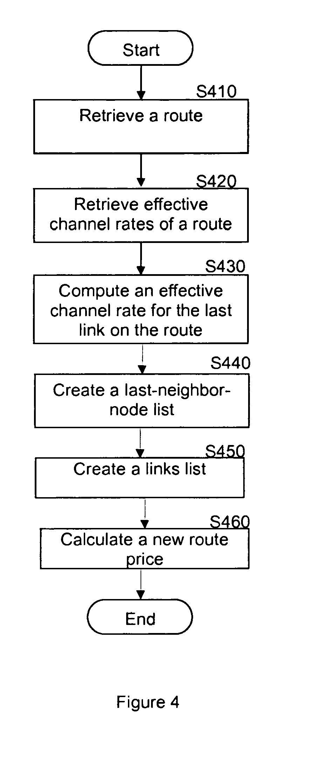

Reference is now made to Figure 4, where the execution of S330 is shown in greater detail. At S410, a route R, which the received RREQ has travelled through, is retrieved from the RREQ. The route R is represented as:

$$R(S, F1, F2, F3, ..., Fk),$$

where the node S is the source node and nodes F1, F2,..., Fk-1 are the nodes that the RREQ already travelled through. At S420, the channel rates used by links along the route are obtained from the received RREQ. The channel rates are represented as (R1, R2, ..., Rk-1), where R1 is the effective channel rate used by the link from nodes S to F1, and Ri (2 < i ≤ k-1) are the channel rates used by the links from nodes Fi-1 to Fi (2 ≤ it ≤ k-1). At S430, an effective transmission channel rate of the link between the nodes that transmitted the RREQ and the node that received the RREQ is computed. The effective channel rate of the link from a transmitting node (Fk-1) to a receiving node (Fk) is referred to as 'Rk', and Li (1 ≤ i ≤ k) denotes links between these nodes. An effective channel rate is the effective channel throughput computed by excluding the PHY/MAC protocol overhead for a given raw channel rate. The effective channel rate is different from a raw channel rate, which is defined by the WiMedia specification. In accordance with one embodiment the effective channel rate Rk is computed, by the receiving node (Fk), as follows:

$$Rk = \frac{P}{T_p}$$

$$T_p = T_{rts} + T_{cts} + T_{data} + T_{ack} + T_{ifs}$$

$$or \qquad T_p = T_{data} + T_{ack} + T_{ifs}$$

$$T_{data} = T_{preamble} + \frac{H_p + P}{R_C}$$

In the above equations, the parameter P is a payload size of a data packet, and the parameter $T_p$ is the total time for completing a transmission of a data packet. The parameter $T_p$ includes the transmission times of data ($T_{data}$) packet and ACK($T_{ack}$) frames as well as any interframe spacing ($T_{ifs}$) between these frames. The time $T_p$ may also include the transmission time of RTS/CTS ($T_{rts}/T_{cts}$) if such are used. A transmission time of a data frame is based on the transmission time of the preamble ($Tp_{reamble}$) which is fixed regardless of the selected channel rate $R_C$, a frame header ($H_P$) which is transmitted at the channel rate $R_C$, the payload size P, and the raw channel rate $R_C$ used to transmit the data frame. The payload size P may be an average payload size or any value adopted by the source node. The raw channel rate $R_C$ may be a fixed channel rate used by the link or can be determined using known link adaptation algorithms.

At S440, the intermediate node (Fk) creates an updated last-node-neighbors list consisting of nodes on the route which are also the neighbors of node (Fk). As mentioned hereinabove, the node Fk receives a RREQ transmitted by the node Fk-1. At S450, a links list is created to include all links having at least one end-node being included in the last-node-neighbors list in the received RREQ or being a neighbor of node (Fk). For example, if the route is R(S, F1, F2, F3 and F4) and the last-node-neighbors list in the RREQ received by a node F4 includes only node F2, then the links list includes links F1->F2, F2->F3 and F3->F4. At S460, a route price of the node (Fk) is computed by summing the reciprocals of the effective channel rate of all links in the links list. That is, the price is calculated as follows:

$$price_{new} = \sum_{i,j=1}^{n} \frac{1}{R_{ij}}$$

where Rij are the effective rates calculated for links Lij (1 ≤ j ≤ n) in the links list, 'n' is the total number of links in the list.

Reference is now made back to Figure 3, where at S340 a check is made to determine if the computed price is larger than the price included in the received RREQ. If so, at S350 the RREQ is updated to include the new computed value; otherwise, execution continues with S360.

At S360, the intermediate node checks whether its cache memory includes other RREQs related to the same source-destination pair as of the received RREQ. If so, at S365, another check is made to determine if the received RREQ (with or without the updated price) has a route price smaller than those indicated in the cached RREQs. If so, at S370 the intermediate node forwards the received RREQ to its neighbors; otherwise, execution ends. In some embodiments the last-node-neighbors list may be updated at S370, in the same fashion as described with respect to S440. If S360 results in a negative answer, execution proceeds to S370.

The selection of the optimal route is performed by the destination node based on the route price. Specifically, if a destination node receives multiple RREQs for the same source-destination pair, the node selects the route travelled by a RREQ with the smallest route price among all the RREQs. The destination node sends a RREP on the selected route. The source and intermediate nodes update their route cache/table after receiving the RREP.

It should be noted that the existing routes discovery protocols, such as DSR and AODV can be adapted to implement the route discovery method disclosed herein. For example, existing routing protocols are required to wait a predefined amount of time to check whether additional RREQs are received during that time before the destination node can send back a RREP.

As another example, if a routing protocol is required to record a route and the route's price between all or some pairs of nodes that RREQs travelled through, the RREQ can be adapted to indicate the list of neighbors that the RREQ travelled through for all or some intermediate nodes (i.e., not only for the last node that the RREQ travelled through).

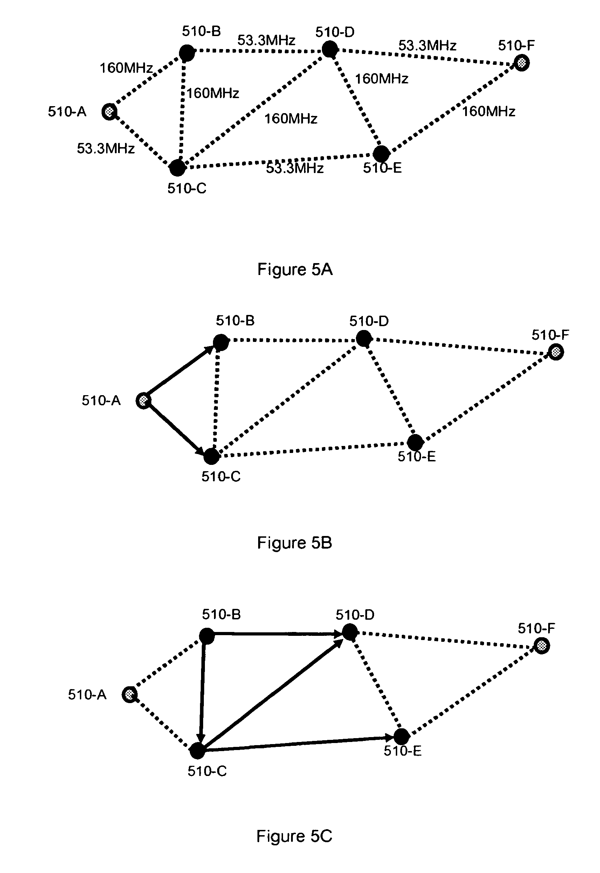

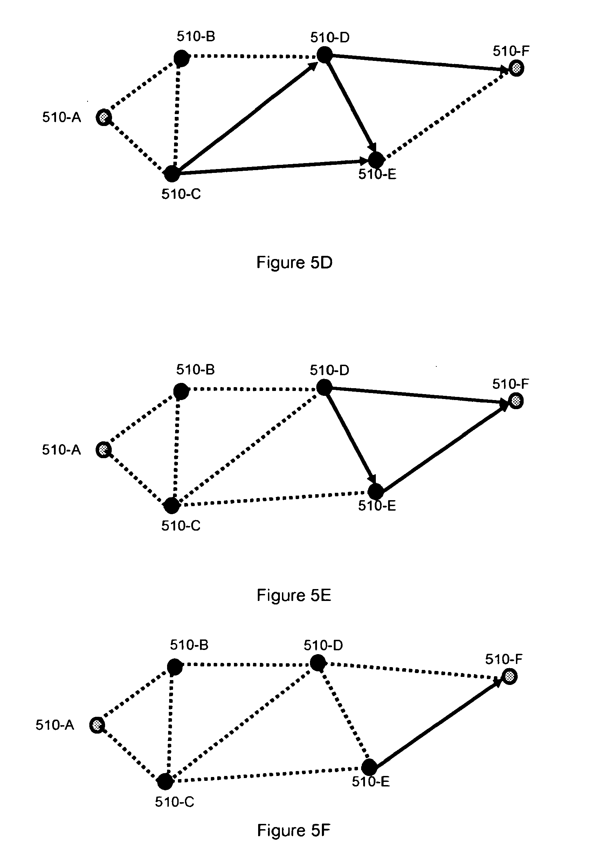

Referring to Figures 5A-5G where a non-limiting example demonstrating the operation of the route discovery process implemented in accordance with an embodiment of the invention is provided. Figure 5A shows a network including six nodes 510-A though 510-F. The effective channel rates of links are shown on the edges between two nodes. For sake of simplicity and demonstration the effective channel rates are the same as raw channel rates.

Figure 5B through Figure 5G show the travel route of RREQ sent from a source node 510-A to a destination node 510-F. The source node 510-A starts the route discovery process by sending a RREQ to nodes 510-B and 510-C (see Figure 5B). The route price calculated by the node 510-B is 1/160 and the route price calculated by node 510-C is 1/53.3. Then, the nodes 510-B and 510-C broadcasts the RREQ. The node 510-C also receives the RREQ sent by the node 510-B, and thereafter calculates the route price for that RREQ, which is 2/160. The new route price is less than previous calculated value 1/53.3. Thus, the node 510-C rebroadcasts the RREQ again with a new route (510-A, 510-B, 510-C) and a new price 2/160 to nodes 510-D and 510-E (see Figure 5C). Other nodes in the network 500 follow the same rule, see Figures 5E and 5F.

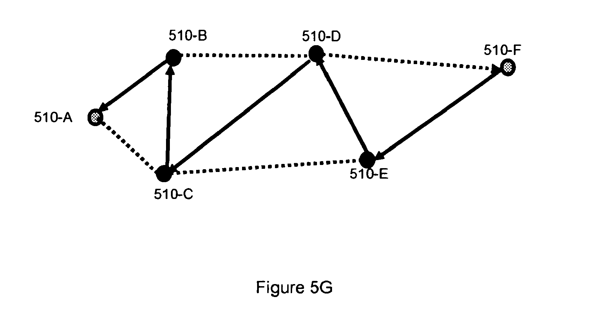

The destination node 510-F receives a RREQ with a route (510-A, 510-B, 510-C, 510-D, 510-E, 510-F) with a price 4/160, a RREQ with a route (510-A, 510-C, 510-E, 510-F) with a route price 2/53.3+1/160, and some other RREQs. The node 510-F compares all the route prices, and selects the route with the smallest price, which is the route (510-A, 510-B, 510-C, 510-D, 510-E, 510-F). Subsequently, the destination node 510-F sends back a RREP along the selected route to the source node 510-A (see Figure 5G). The source node 510-A updates its route cache/table, and the route from nodes 510-A to 510-F is established.

It should be appreciated that routes discovered using the method described above have better throughput than shortest-hop routes discovered by existing protocols. For example such protocols would select routes (510-A, 510-C, 510-E, 510-F), (510-A, 510-B, 510-D, 510-F), or (510-A, 510-C, 510-D, 510-F). All these three routes have the same price 2/53.3+1/160 ≈ 1/22.8, which has an approximate throughput of 22.8Mbps. For the network, the disclosed method selects the route (510-A, 510-B, 510-C, 510-D, 510-E, 510-F) with a price of 1/40 and an approximate throughput of 40Mbps. Therefore, the improvement for this example is about 75% in the end-to-end throughput. If there are more nodes and higher rates are available, the improvement can be even higher.

The disclosed method can be implemented in communication systems including, but not limited to, UWB based WPANs, WiMedia based wireless networks and WPANs, or any time division multiple access (TDMA) or superframe based wireless networks.

The principles of the invention are implemented as a combination of hardware, firmware and software. Moreover, the software is preferably implemented as an application program tangibly embodied on a program storage unit or computer readable medium. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such computer or processor is explicitly shown. In addition, various other peripheral units may be connected to the computer platform such as an additional data storage unit and a printing unit.

The foregoing detailed description has set forth a few of the many forms that the invention can take. It is intended that the foregoing detailed description be understood as an illustration of selected forms that the invention can take and not as a limitation to the definition of the invention. It is only the claims, including all equivalents that are intended to define the scope of this invention.

**Claims**

1. A method (300) for discovering a route having a highest throughput between a source node and a destination node in mesh wireless media WiMedia based networks, comprising:

   upon receiving a route request RREQ by an intermediate node between the source node and the destination node, saving, in the RREQ, at least the identification ID number of the intermediate node and a transmission channel rate of a link on which the RREQ is received on (S320); computing a new route price based on effective transmission rates of links in a route (S330); determining if the new route price is larger than a price included in the received RREQ (S340); updating the received RREQ to include the new route price when the new route price is larger than the route price in the received RREQ (S350); and forwarding the updated RREQ to one or more neighbors of the intermediate node (S370).

2. The method of claim 1, further comprising determining if there are one or more RREQs cached in the intermediate node (S360); finding a RREQ having a smaller route price value among the one or more cached RREQs, the updated RREQ, and the received RREQ (S365); and forwarding the RREQ determined to have the smallest route price to the one or more neighbors of the intermediate node (S370).

3. The method of claim 1, where the route price is a reciprocal sum of effective transmission rates calculated for links in a route.

4. The method of claim 3, wherein computing the route price further comprises:

   retrieving the route on which the received RREQ has travelled through (S410); obtaining the transmission channel rates used by links along the route, wherein each link is between a node transmitting RREQ and a node receiving RREQ (S420); computing an effective transmission channel rate for each link (S430); creating a links list (S450); and

   summing the reciprocals of the effective transmission channel rates of all links in the links list (S460).

5. The method of claim 4, wherein the links list includes all links having at least one end-node designated in a last-node-neighbors list or at least one end-node which is a neighbor of the intermediate node.

6. The method of claim 5, wherein the last-node-neighbors list includes nodes on the route which are neighbors of a node that transmitted the received RREQ to the intermediate node.

7. The method of claim 6, further comprising creating the last-node-neighbors list to include node on the route which are also neighbors of the intermediate node (S440); and saving the updated last-node-neighbors list in the received RREQ.

8. The method of claim 5, wherein the last-node-neighbors list, transmission channel rates and the route on which the RREQ travelled through are maintained in the RREQ.

9. The method of claim 4, wherein the effective channel transmission rate of a link is computed by dividing a payload size of a data packet by a time required to complete transmission of a data packet over the link.

10. The method of claim 9, wherein the time to complete transmission of a data packet equals a sum of at least transmission times of a data frame $T_{data}$, acknowledge $T_{ack}$ frames, and interframe spacing $T_{ifs}$ between acknowledge and data frames.

11. The method of claim 10, wherein the transmission time $T_{data}$ is computed by:

$$T_{data} = T_{preamble} + \frac{H_p + P}{R_C},$$ wherein $T_{preamble}$

is a transmission time of a preamble of the frame; $H_p$ is a size of a frame header, P is a size of a payload, and $R_C$ is the transmission channel rate of the link.

12. The method of claim 2, wherein the route between the source node and the destination node is selected to be the route travelled by the RREQ with the smallest route price among all RREQs received by the destination node.

13. The method of claim 1, further comprising generating a route response (RREP) by the destination node; and sending the RREP to the source node on the selected route.

**14.** A computer readable medium having stored thereon computer executable code, when executed casing a processor to perform the step of discovering a route having a highest throughput between a source node and a destination node in mesh wireless media Wi-Media based networks, comprising:

upon receiving a route request RREQ by an intermediate node between the source node and the destination node, saving, in the RREQ, at least the identification ID number of the intermediate node and a transmission channel rate of a link on which the RREQ is received on (S320); computing a new route price based, on effective transmission rates of links in a route (S330); determining if the new route price is larger than a price included in the received RREQ (S340); updating the received RREQ to include the new route price when the new route price is larger than the route price in the received RREQ (S350); and

forwarding the updated RREQ to one or more neighbors of the intermediate node (S370).

**15.** The computer readable medium of claim 14, wherein the computing the route price further comprises:

retrieving the route on which the received RREQ has travelled through (S410); obtaining the transmission channel rates used by links along the route, wherein each link is between a node transmitting RREQ and a node receiving RREQ (S420); computing an effective transmission channel rate for each link (S430); creating a links list (S450); and summing the reciprocals of the effective transmission channel rate of all links in the link list (S460).

**Patentansprüche**

**1.** Verfahren (300) zur Erkennung einer Route mit einem höchsten Durchsatz zwischen einem Quellenknoten und einem Zielknoten in drahtlosen Mesh-Medienbasierten Netzwerken, WiMedia, wobei dieses Verfahren die nachfolgenden Verfahrensschritte umfasst:

bei Empfang eines Routenantrags RREQ durch einen Zwischenknoten zwischen einem Quellenknoten und einem Zielknoten, das Sparen in dem RREQ wenigstens der Identifikationsnummer ID des Zwischenknotens und einer Übertragungskanalrate einer Verbindung, über die der RREQ in (S320) empfangen wird; das Berechnen eines neuen Routenpreises auf Basis effektiver Übertragungsraten von Verbindungen in einer Route (S330); das Ermitteln, ob der neue Routenpreis niedriger ist als ein Preis in dem empfangenen RREQ (S340); das Aktualisieren des empfangenen RREQ zum Enthalten des neuen Routenpreises wenn der neue Routenpreis höher ist als der Routenpreis in dem empfangenen RREQ (S350); und das Transportieren des aktualisierten RREQ zu einem oder mehreren Nachbarn des Zwischenknotens (S370).

**2.** Verfahren nach Anspruch 1, das weiterhin Folgendes umfasst: das Ermitteln, ob es in dem Zwischenknoten (S360) einen oder mehrere versteckte RREQs gibt; das Finden eines RREQ mit einem niedrigeren Routenpreiswert unter dem einen oder den mehreren versteckten RREQs, dem aktualisierten RREQ und dem empfangenen RREQ (S365); und das Transportieren des RREQ mit dem niedrigsten Routenpreis zu einem oder mehreren Nachbarn des Zwischenknotens (S370).

**3.** Verfahren nach Anspruch 1, wobei der Routenpreis eine umgekehrte Summe für Verbindungen in einer Route berechneter, effektiver Übertragungsraten ist.

**4.** Verfahren nach Anspruch 3, wobei das Berechnen des Routenpreises weiterhin Folgendes umfasst:

das Ermitteln der Route, über die der empfangene RREQ gegangen ist; das Erhalten der Übertragungskanalraten, die von Verbindungen längs der Route verwendet wurden, wobei jede Verbindung zwischen einem den RREQ übertragenden Knoten und einem den RREQ empfangenden Knoten liegt (S420); das Berechnen einer effektiven Übertragungskanalrate für jede Verbindung (S430); das Schaffen einer Liste mit Verbindungen (5450); und das Summieren der reziproken Werte der effektiven Übertragungskanalraten aller Verbindungen in der Liste (S460).

**5.** Verfahren nach Anspruch 4, wobei die Liste mit Verbindungen alle Verbindungen enthält, die wenigstens einen Endknoten haben, entworfen in einer Letzter-Knoten-Nachbarliste oder wenigstens einen Endknoten, der Nachbar des Zwischenknotens ist.

**6.** Verfahren nach Anspruch 5, wobei die Letzter-Knoten-Nachbarliste Knoten auf der Route enthält, die Nachbar eines Knotens sind, der den empfangenen RREQ zu dem Zwischenknoten übertrug.

**7.** Verfahren nach Anspruch 6, das weiterhin Folgendes umfasst: das Schaffen der Letzter-Knoten-Nachbarliste zum Enthalten von Knoten, die ebenfalls Nachbar des Zwischenknotens (S440) sind; und das Sparen der aktualisierten Letzter-Knoten-Nachbarliste in dem empfangenen RREQ.

**8.** Verfahren nach Anspruch 5, wobei die Letzter-Knoten-Nachbarliste, die Übertragungskanalraten und die Route, über die der RREQ gelaufen ist, in dem RREQ beibehalten werden.

**9.** Verfahren nach Anspruch 4, wobei die effektive Kanalübertragungsrate einer Verbindung durch Teilung einer Nutzlastgröße eines Datenpakets durch eine Zeit, erforderlich zur Vervollständigung der Übertragung eines Datenpakets über die Verbindung berechnet wird.

**10.** Verfahren nach Anspruch 9, wobei die Zeit zum Vervollständigen der Übertragung eines Datenpakets einer Summe von wenigstens Übertragungszeiten eines Datenframes $T_{data}$, Bestätigungsframes $T_{ack}$, und Interframeräumen $T_{ifs}$, zwischen Bestätigungs- und Datenframes entspricht.

**11.** Verfahren nach Anspruch 10, wobei die Übertragungszeit $T_{data}$ berechnet wird durch:

$$T_{data} = T_{preamble} + \frac{H_p + P}{R_c},$$

wobei $T_{preamble}$ eine Übertragungszeit einer Präambel des Frames ist; wobei $H_p$ eine Größe eines Frameheaders ist, wobei $P$ eine Größe einer Nutzlast ist und wobei $R_c$ die Übertragungskanalrate der Verbindung ist.

**12.** Verfahren nach Anspruch 2, wobei die Route zwischen dem Quellenknoten und dem Zielknoten derart gewählt wird, dass es sich dabei um die Route handelt, über die der RREQ gegangen ist, und zwar mit dem niedrigsten Routenpreis unter allen von dem Zielknoten empfangenen RREQs.

**13.** Verfahren nach Anspruch 1, das weiterhin Folgendes umfasst:

das Erzeugen einer Routenreaktion (RREP) durch den Zielknoten; und
das Senden der RREP zu dem Quellenknoten über die gewählte Route.

**14.** Vom Computer auslesbares Medium, auf dem ein vom Computer durchführbarer Code gespeichert ist, wenn durchgeführt mit einem Prozessor zum Durchführen des Verfahrensschrittes der Entdeckung einer Route mit einem höchsten Durchsatz zwischen einem Quellenknoten und einem Zielknoten in drahtlosen Medienbasierten Netzwerken, WiMedia, wobei dieser Verfahrensschritt Folgendes umfasst:

bei Empfang eines Routenantrags RREQ durch einen Zwischenknoten zwischen einem Quellenknoten und einem Zielknoten, das Sparen in dem RREQ wenigstens der Identifikationsnummer ID des Zwischenknotens und einer Übertragungskanalrate einer Verbindung, über die der RREQ in (S320) empfangen wird;
das Berechnen eines neuen Routenpreises auf Basis effektiver Übertragungsraten von Verbindungen in einer Route (S330);
das Ermitteln, ob der neue Routenpreis niedriger ist als ein Preis in dem empfangenen RREQ (S340);
das Aktualisieren des empfangenen RREQ zum Enthalten des neuen Routenpreises wenn der neue Routenpreis höher ist als der Routenpreis in dem empfangenen RREQ (S350); und
das Transportieren des aktualisierten RREQ zu einem oder mehreren Nachbarn des Zwischenknotens (S370).

**15.** Vom Computer auslesbares Medium nach Anspruch 14, wobei das Berechnen des Routenpreises weiterhin Folgendes umfasst:

das Ermitteln der Route, über die der empfangene RREQ gegangen ist;
das Erhalten der Übertragungskanalraten, die von Verbindungen längs der Route verwendet wurden, wobei jede Verbindung zwischen einem den RREQ übertragenden Knoten und einem den RREQ empfangenden Knoten liegt (S420):
das Berechnen einer effektiven Übertragungskanalrate für jede Verbindung (S430);
das Schaffen einer Liste mit Verbindungen (S450); und
das Summieren der reziproken Werte der effektiven Übertragungskanalraten aller Verbindungen in der Liste (S460).

## Revendications

**1.** Procédé (300) pour découvrir un itinéraire ayant un débit le plus élevé entre un noeud de source et un noeud de destination dans des réseaux basés sur médias sans fil maillés WiMedia, comprenant les étapes suivantes consistant à :

sauvegarder, dans la demande d'itinéraire RREQ, à la réception d'une demande d'itinéraire RREQ par un noeud intermédiaire entre le noeud de source et le noeud de destination, au moins le nombre d'identification ID du noeud intermédiaire et un taux de canal de transmission d'une liaison sur laquelle la RREQ est reçue (S320) ;

calculer un nouveau prix d'itinéraire sur la base de taux de transmission efficaces de liaisons dans un itinéraire (S330) ;

déterminer si le nouveau prix d'itinéraire est supérieur à un prix qui est inclus dans la RREQ reçue (S340) ;

mettre à jour la RREQ reçue pour inclure le nouveau prix d'itinéraire lorsque le nouveau prix d'itinéraire est supérieur au prix d'itinéraire dans la RREQ reçue (S350); et

envoyer la RREQ mise à jour à un ou à plusieurs voisins du noeud intermédiaire (S370).

2. Procédé selon la revendication 1, comprenant en outre les étapes suivantes consistant à :

déterminer s'il y a une ou plusieurs demandes RREQ qui sont mises en mémoire cache dans le noeud intermédiaire (S360) ;

trouver une RREQ ayant une plus petite valeur de prix d'itinéraire parmi une ou plusieurs demandes d'itinéraire RREQ mises en mémoire cache, la RREQ mise à jour et la RREQ reçue (S365) ; et

envoyer la RREQ qui est déterminée de manière à présenter le prix d'itinéraire le plus bas à un ou à plusieurs voisins du noeud intermédiaire (S370).

3. Procédé selon la revendication 1, dans lequel le prix d'itinéraire est une somme réciproque de taux de transmission efficaces qui sont calculés pour des liaisons dans un itinéraire.

4. Procédé selon la revendication 3, dans lequel le calcul du prix d'itinéraire comprend en outre les étapes suivantes consistant à :

récupérer l'itinéraire que la RREQ a parcouru (S410) ;

obtenir les taux de canal de transmission qui sont utilisés par des liaisons le long de l'itinéraire dans lequel chaque liaison se situe entre un noeud qui transmet une RREQ et un noeud qui reçoit une RREQ (S420) ;

calculer un taux de canal de transmission efficace pour chaque liaison (S430) ;

créer une liste de liaisons (5450) ; et

additionner les réciproques des taux de canal de transmission efficaces de toutes les liaisons dans la liste de liaisons (S460).

5. Procédé selon la revendication 4, dans lequel la liste de liaisons inclut toutes les liaisons ayant au moins un noeud d'extrémité qui est désigné dans une liste de voisins de dernier noeud ou au moins un noeud d'extrémité qui est un voisin du noeud intermédiaire.

6. Procédé selon la revendication 5, dans lequel la liste de voisins de dernier noeud inclut des noeuds sur l'itinéraire qui sont des voisins d'un noeud qui a transmis la RREQ reçue au noeud intermédiaire.

7. Procédé selon la revendication 6, comprenant en outre les étapes suivantes consistant à :

créer la liste de voisins de dernier noeud pour inclure des noeuds sur l'itinéraire qui sont également des voisins du noeud intermédiaire (S440) ; et

sauvegarder la liste de voisins de dernier noeud mise à jour dans la RREQ reçue.

8. Procédé selon la revendication 5, dans lequel la liste de voisins de dernier noeud, les taux de canal de transmission et l'itinéraire que la RREQ a parcouru sont maintenus dans la RREQ.

9. Procédé selon la revendication 4, dans lequel le taux de transmission de canal efficace d'une liaison est calculé par la division d'une taille de charge utile d'un paquet de données par un temps qui est requis pour compléter la transmission d'un paquet de données sur la liaison.

10. Procédé selon la revendication 9, dans lequel le temps pour compléter la transmission d'un paquet de données est égal à une somme d'au moins de temps de transmission d'une trame de données $T_{data}$, de trames d'accusé de réception $T_{ack}$ et d'espacement d'intertrame $T_{IFS}$ entre des trames d'accusé de réception et de données.

11. Procédé selon la revendication 10, dans lequel le temps de transmission $T_{date}$ est calculé par :

$$T_{data} = T_{preamble} + \frac{H_P + P}{R_C},$$

où $T_{preamble}$ est un temps de transmission d'un préambule de la trame, $H_p$ est une taille d'un en-tête de trame, $P$ est une taille d'une charge utile et $R_C$ est le taux de canal de transmission de la liaison.

12. Procédé selon la revendication 2, dans lequel l'itinéraire entre le noeud de source et le noeud de destination est sélectionné de manière à être l'itinéraire qui est parcouru par la RREQ avec le prix d'itinéraire le plus bas parmi toutes les demandes d'itinéraire RREQ qui sont reçues par le noeud de destination.

13. Procédé selon la revendication 1, comprenant en outre les étapes suivantes consistant à :

générer une réponse d'itinéraire RREP par le noeud de destination ; et
envoyer la RREP au noeud de source sur l'itinéraire sélectionné.

14. Support lisible par ordinateur ayant stocké sur celui-ci un code exécutable par ordinateur, lorsqu'il est exécuté en tant que boîtier, un processeur pour réaliser l'étape de découverte d'un itinéraire ayant un débit le plus élevé entre un noeud de source et un noeud de destination dans des réseaux basés sur médias sans fil maillés WiMedia, comprenant les étapes suivantes consistant à :

sauvegarder, dans la demande d'itinéraire RREQ, à la réception d'une demande d'itinéraire RREQ par un noeud intermédiaire entre la noeud de source et le noeud de destination, au moins le nombre d'identification ID du noeud intermédiaire et un taux de canal de transmission d'une liaison sur laquelle la RREQ est reçue (S320) ;
calculer un nouveau prix d'itinéraire sur la base de taux de transmission efficaces de liaisons dans un itinéraire (S330) ;
déterminer si le nouveau prix d'itinéraire est supérieur à un prix qui est inclus dans la RREQ reçue (S340) ;
mettre à jour la RREQ reçue pour inclure le nouveau prix d'itinéraire lorsque le nouveau prix d'itinéraire est supérieur au prix d'itinéraire dans la RREQ reçue (S350); et
envoyer la RREQ mise à jour à un ou à plusieurs voisins du noeud intermédiaire (S370).

15. Support lisible par ordinateur selon la revendication 14, dans lequel le calcul du prix d'itinéraire comprend en outre les étapes suivantes consistant à :

récupérer l'itinéraire que la RREQ a parcouru (S410) ;
obtenir les taux de canal de transmission qui sont utilisés par des liaisons le long de l'itinéraire dans lequel chaque liaison se situe entre un noeud qui transmet une RREQ et un noeud qui reçoit une RREQ (5420) ;
calculer un taux de canal de transmission efficace pour chaque liaison (S430);
créer une liste de liaisons (S450) ; et
additionner les réciproques des taux de canal de transmission efficaces de toutes les liaisons dans la liste de liaisons (S460).

Figure 1

Figure 2A

Figure 2B

210-E

210-B

210-A

210-D

210-F

210-C

Figure 2C

210-E

210-B

210-A

210-D

210-F

210-C

Figure 2D

_300_

```
        ┌─────────────┐
        │    Start     │
        └─────────────┘
               │
               ▼           S310
    ┌────────────────────────┐
    │      Receive RREQ       │
    └────────────────────────┘
               │
               ▼           S320
    ┌────────────────────────┐
    │    Insert node's ID and │
    │  channel rate into RREQ │
    └────────────────────────┘
               │
               ▼           S330
    ┌┐┌────────────────────┐┌┐
    ││ │   Compute a new    │ ││
    ││ │    route price     │ ││
    └┘└────────────────────┘└┘
               │
               ▼      S340
           ╱ New price ╲              Yes
          ╱      >       ╲───────────────────────┐
          ╲  old price ? ╱                        │  S350
           ╲            ╱              ┌────────────────────────┐
               │                       │  Update RREQ with the   │
               No                      │    new price value      │
               │                       └────────────────────────┘
               ▼      S360                         │
           ╱ Are more RREQs ╲          No          │
          ╱     cached?      ╲──────────────┐      │
          ╲                  ╱              │◄─────┘
               │                            │
               Yes                          │
               │                            │
               ▼      S365                  │
           ╱ RREQ has a ╲       Yes         ▼       S370
          ╱  smallest    ╲──────────┐┌────────────────────────┐
          ╲   value?     ╱          ││     Forward RREQ        │
               │                     └────────────────────────┘
               No                            │
               │◄───────────────────────────┘
               ▼
        ┌─────────────┐
        │     End      │
        └─────────────┘
```

Figure 3

```
                    ┌─────────────┐
                    (    Start    )
                    └─────────────┘
                           │
                           │        S410
                           ▼
              ┌──────────────────────────┐
              │      Retrieve a route     │
              │                           │
              │                           │
              └──────────────────────────┘
                           │
                           │        S420
                           ▼
              ┌──────────────────────────┐
              │     Retrieve effective    │
              │   channel rates of a route│
              │                           │
              └──────────────────────────┘
                           │
                           │        S430
                           ▼
              ┌──────────────────────────┐
              │    Compute an effective   │
              │  channel rate for the last│
              │     link on the route     │
              └──────────────────────────┘
                           │
                           │        S440
                           ▼
              ┌──────────────────────────┐
              │   Create a last-neighbor- │
              │         node list         │
              │                           │
              └──────────────────────────┘
                           │
                           │        S450
                           ▼
              ┌──────────────────────────┐
              │      Create a links list  │
              │                           │
              └──────────────────────────┘
                           │
                           │        S460
                           ▼
              ┌──────────────────────────┐
              │   Calculate a new route   │
              │           price           │
              └──────────────────────────┘
                           │
                           ▼
                    ┌─────────────┐
                    (     End     )
                    └─────────────┘
```

Figure 4

Figure 5A

Figure 5B

Figure 5C

Figure 5D

Figure 5E

Figure 5F

Figure 5G

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61084709 A
- US 20040029553 A
- WO 2004114690 A
- WO 2007073466 A